# EUROPEAN PATENT APPLICATION

(11) **EP 3 415 853 A1**
(43) Date of publication of application: **19.12.2018**
(21) Application number: 17899181.6
(22) Date of filing: 28.02.2017
(51) Int. Cl.: F28D 7/10, F28D 7/02

(54) **HEAT EXCHANGER**

(71) Applicant: Tomoe Shokai Co., Ltd, 1448505 Tokyo (JP)
(72) Inventor: SATO Shunji, Tokyo 1448505 (JP); ITO Masaru, Tokyo 1448505 (JP); KAWAGUCHI Yutaka, Tokyo 1448505 (JP); MIYAZU Masayuki, Tokyo 1448505 (JP)
(74) Representative: Higgs, Jonathan
(86) International application number: PCT/JP2017/007912
(87) International publication number: WO 2018/158843

(57) **Abstract**

The present invention radically changes the structure of a conventional shell and coil heat exchanger, and provides a heat exchanger with drastically improved heat exchange efficiency despite its simple structure.

A heat exchanger of the present invention can efficiently and evenly cool a cooling-target fluid by including: an interior tube; an exterior tube, the interior tube and the exterior tube being coaxially disposed to each other to structure a double-tube structure, an annular flow channel being formed along an axial direction between an outer circumferential surface of the interior tube and an inner circumferential surface of the exterior tube; and a coil tube disposed along the axial direction in the annular flow channel to form a spiral flow channel, wherein no flow channel is formed inside the interior tube, and heat is exchanged between a cooling fluid flowing in a certain direction in the annular flow channel and a cooling-target fluid flowing in a certain direction in the spiral flow channel.

## Description

### Technical Field

The present invention mainly relates to a heat exchanger used in cooling. For example, the present invention relates to a heat exchanger suitable as a pre-cooler for previously cooling hydrogen gas supplied to a fuel cell vehicle (Fuel Cell Vehicle) to attain a desired temperature within a short time.

### Background Art

Conventionally, a shell and coil heat exchanger is widely known as a cooling-purpose heat exchanger. The shell and coil heat exchanger includes a coil tube having a spiral flow channel, and a shell (a container, a cylinder, a tube or the like) covering the coil tube. Using two fluids being different from each other in thermal energy, the shell and coil heat exchanger has one of the two fluids flowed inside the coil tube, and has another one flowed or stayed outside the coil tube, so that heat is efficiently exchanged between the two fluids.

For example, heat exchangers disclosed in the following Patent Literatures 1 and 2 each have a double-tube structure made up of an inner tube and an outer tube disposed coaxially to each other. Inside an annular flow channel formed between the outer circumferential surface of the inner tube and the inner circumferential surface of the outer tube, a spiral flow channel is formed by a coil tube along the axial direction. Between a fluid flowing in the annular flow channel and a fluid flowing in the spiral flow channel, heat is exchanged.

### Citation List

### Patent Literature

Patent Literature 1: Japanese Utility Model Application Publication No. 1-170875
Patent Literature 2: Japanese Utility Model Application Publication No. 6-84270

### Summary of Invention

### Technical Problem

In each of the heat exchangers disclosed in Patent Literatures 1 and 2, the axial direction of the heat exchanger is in the top-bottom direction and, as a matter of course, the annular flow channel is a flow channel extending in the top-bottom direction. Further, each of the heat exchangers is on the premise that the fluid in the annular flow channel flows downward (falls) by gravity and stays at the bottom part of the annular flow channel.

Hence, there arises a problem that efficient heat exchange is hardly achieved due to heat exchange imbalance between a portion where the fluid stays and a portion where the fluid is flowing in the annular flow channel relative to the fluid flowing in the spiral flow channel. In particular, such heat exchangers are inappropriate for heat exchange intended to cool a fluid within a short time.

Further, the heat exchanger disclosed in Patent Literature 1 uses the inside of the inner tube as a supply conduit for guiding the fluid to the annular flow channel. The heat exchanger disclosed in Patent Literature 2 uses the inside of the inner tube as a discharge conduit for discharging the fluid from the annular flow channel.

Hence, the heat exchangers according to Patent Literatures 1 and 2 are based on the premise of, in addition to exchanging heat between the fluid in the annular flow channel and the fluid in the spiral flow channel, exchanging heat between the fluid flowing inside the inner tube and the fluid inside the annular flow channel. Therefore, they are inefficient for the purpose of exchanging heat just between the fluid in the annular flow channel and the fluid in the spiral flow channel. Accordingly, they are inappropriate for heat exchange intended to cool a fluid within a short time.

### Solution to Problem

The present invention radically changes the structure of the above-described conventional shell and coil heat exchanger, and provides a heat exchanger with drastically improved heat exchange efficiency despite its simple structure.

In summary, a heat exchanger of the present invention can efficiently and evenly cool a cooling-target fluid by including: an interior tube; an exterior tube, the interior tube and the exterior tube being coaxially disposed to each other to structure a double-tube structure, an annular flow channel being formed along an axial direction between an outer circumferential surface of the interior tube and an inner circumferential surface of the exterior tube; and a coil tube disposed along the axial direction in the annular flow channel to form a spiral flow channel, wherein no flow channel is formed inside the interior tube, and heat is exchanged between a cooling fluid flowing in a certain direction in the annular flow channel and a cooling-target fluid flowing in a certain direction in the spiral flow channel.

Preferably, the structure in which the direction in which the cooling fluid flows is a counterflow relative to the direction in which the cooling-target fluid flows achieves further efficient heat exchange and, consequently, achieves cooling the cooling-target fluid within a short time.

Further, the structure in which the coil tube is removably inserted into the annular flow channel facilitates maintenance such as inspection of the coil tube circumferential wall. Hence, particularly when the cooling-target fluid is a fluid that must be handled with care, safety is secured.

Still further, in the annular flow channel, the average coil diameter of the coil tube is set so that the cross-sectional area of an outer annular flow channel outer than the coil tube and the cross-sectional area of an inner annular flow channel inner than the coil tube become identical to each other. Thus, the cooling fluid flowing in the outer annular flow channel and the cooling fluid flowing in the inner annular flow channel coincide with each other in flow velocity and flow rate, whereby the cooling-target fluid is evenly cooled from the inner and outer sides.

Preferably, a shape retainer is provided at the coil tube along the axial direction to retain the whole shape and coil pitch of the coil tube. Thus, proper flow of each of the cooling fluid and the cooling-target fluid is secured.

A heat insulator is provided at just one of the inside of the interior tube and the outside of the exterior tube. Alternatively, a heat insulator is provided at both the inside of the interior tube and the outside of the exterior tube. Thus, the heat exchange efficiency further improves.

### Advantageous Effects of Invention

The heat exchanger of the present invention is capable of surely cooling the cooling-target fluid within a short time despite its simple structure. Further, the simple structure contributes to reducing the material cost and the assembly cost.

Further, in the heat exchanger of the present invention, the cooling fluid and the cooling-target fluid each flow in a certain direction and, therefore, the flow energy of each fluid is not wasted. Hence, a plurality of heat exchangers can be connected easily, and heat exchange can further improve.

Still further, a coil tube can be removably inserted between the interior tube and the exterior tube, whereby excellent maintainability and safety are achieved.

### Brief Description of Drawings

Fig. 1 is a perspective exploded view showing the relationship between an interior tube and a coil tube.
Fig. 2 is a perspective exploded view showing the relationship between the interior tube and the coil tube, and an exterior tube.
Fig. 3 is a front view of a heat exchanger of the present invention.
Fig. 4 is a vertical cross-sectional view of the heat exchanger of the present invention.
Fig. 5 is an enlarged cross-sectional view showing the interior tube, the coil tube, the exterior tube, and an annular flow channel.
Fig. 6 is a cross-sectional view taken along line X-X in Fig. 5.
Fig. 7 is an enlarged left side view of the heat exchanger of the present invention.
Fig. 8 is an enlarged left side view showing other example of the heat exchanger of the present invention.
Fig. 9 is a schematic diagram of a coupling example of the heat exchanger of the present invention.
Fig. 10 is a schematic diagram showing other coupling example of the heat exchanger of the present invention.

### Description of Embodiments

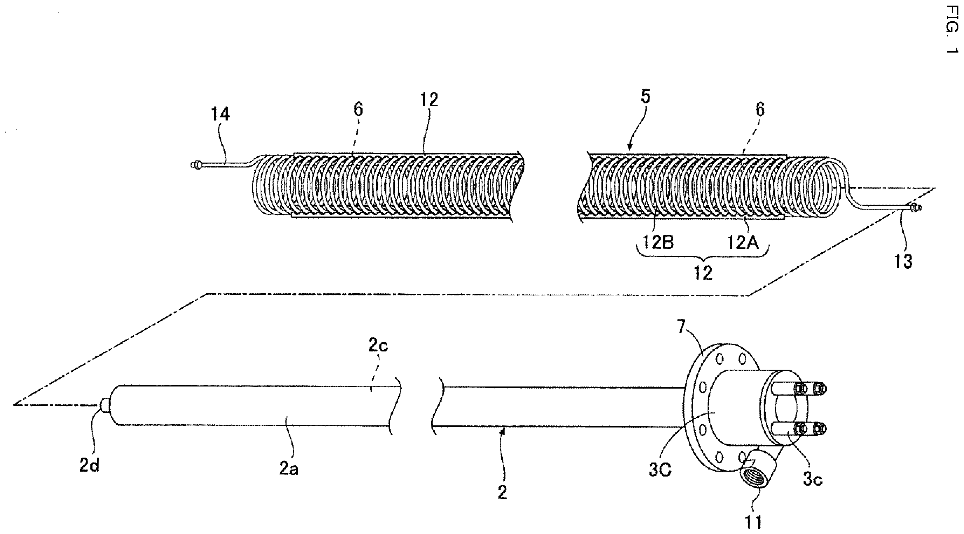

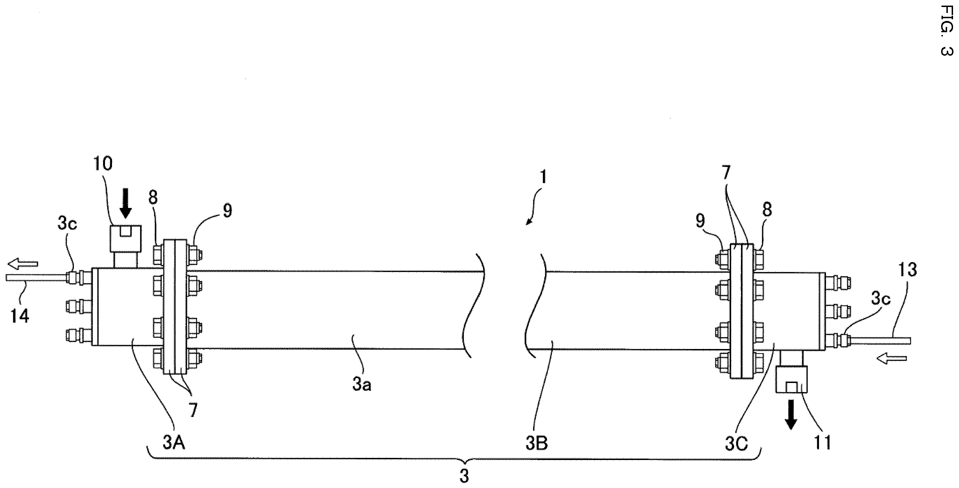

In the following, with reference to Figs. 1 to 10, a description will be given of the most suitable embodiment of a heat exchanger of the present invention. Note that, in the embodiment, while a pre-cooler for previously cooling hydrogen gas supplied to a fuel cell vehicle is exemplary shown as the heat exchanger, it goes without saying that the heat exchanger of the present invention is not limited to a heat exchanger for cooling hydrogen gas.

### <Basic structure>

As shown in Figs. 1 to 4, a heat exchanger 1 of the present invention has a double-tube structure made up of an interior tube 2 and an exterior tube 3 which are coaxially disposed about a center axis 0. Between an outer circumferential surface 2a of the interior tube 2 and an inner circumferential surface 3b of the exterior tube 3, an annular flow channel 4 whose cross-sectional shape is annular is formed along the axial direction. In the annular flow channel 4, a coil tube 5 is disposed along the axial direction, whereby a spiral flow channel 6 is formed. The foregoing is the basic structure. The axial direction of the heat exchanger 1 of the present invention may be either of the top-bottom direction and the right-left direction. That is, the heat exchanger 1 can be vertically installed or horizontally installed.

As described above, the present embodiment is predicated on a pre-cooler for cooling hydrogen gas. Therefore, a description will be given of the case where heat is exchanged between brine (antifreeze) which is a cooling fluid flowing in the annular flow channel 4 and hydrogen gas which is a cooling-target fluid flowing in the spiral flow channel 6. That is, the cooling fluid is liquid, and the cooling-target fluid is gas. The hydrogen gas which is the cooling-target fluid is cooled from about 40°C to -37°C.

The brine is not particularly specified so long as it is in the liquid state at about -40°C which is the supply temperature . For example, hydrofluoroether (HFE), potassium formate solution or the like is used.

### <<Structure of interior tube>>

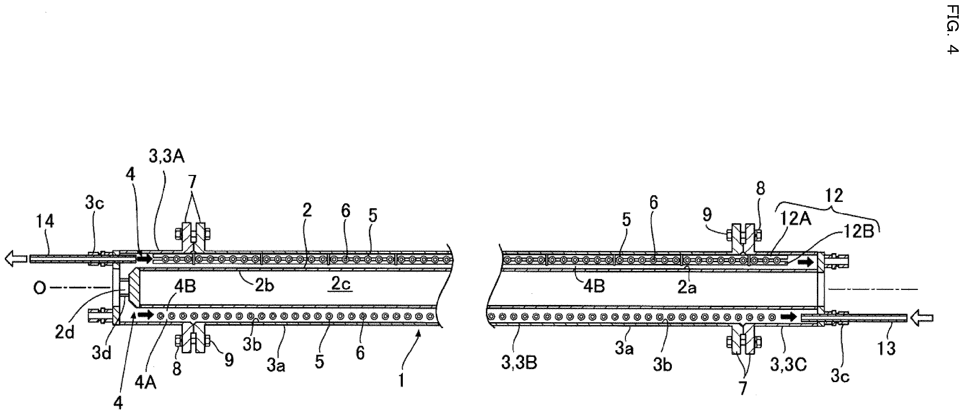

The interior tube 2 is a round tube made of metal such as stainless steel, and has, for example, an inner diameter of 54.9 mm, an outer diameter of 60.5 mm, and a circumferential wall thickness of 2.8 mm. As shown in Fig. 4, while the interior tube 2 includes an inside part 2c surrounded by the inner circumferential surface 2b, in the present invention, this inside part 2c is not used as a flow channel of the brine or the hydrogen gas. That is, the inside part 2c of the interior tube 2 communicates with none of the annular flow channel 4 and the spiral flow channel 6.

The inside part 2c functions as a heat-insulating space while remaining as a hollow, or with a heat insulator such as urethane foam being inserted therein. The heat exchanger 1 of the present invention is specialized in exchanging heat between the brine in the annular flow channel 4 and the hydrogen gas in the spiral flow channel 6 thereby achieving efficient heat exchange. The heat exchanger 1 of the present invention avoids providing unwanted thermal energy to the brine flowing in the annular flow channel 4.

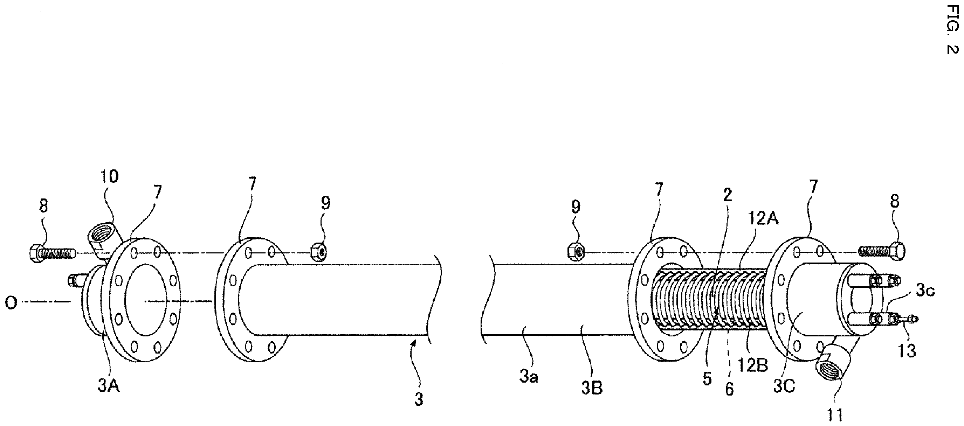

Further, at one end of the interior tube 2 in the axial direction, a centering projection 2d is provided. By the centering projection 2d fitting into a receiving recess 3d provided at a one end tube 3A of the exterior tube 3 which will be described later, the interior tube 2 and the exterior tube 3 are properly coaxially disposed. While the centering projection 2d may also be arbitrarily provided at other end of the interior tube 2, as shown in Figs. 1 and 2, if the other end of the interior tube 2 is previously integrated with another end tube 3C of the exterior tube 3 which will be described later by welding or the like, the assembly work is facilitated.

### <<Structure of exterior tube>>

The exterior tube 3 is a round tube made of metal such as stainless steel, and structured by three pieces of divided tubes for the sake of assemblability and insertion or removal of the coil tube 5. In view of the exemplary dimension of the interior tube 2, the exterior tube 3 has, for example, an inner diameter of 108.3 mm, an outer diameter of 114.3 mm, and a circumferential wall thickness of 3.0 mm.

In more detail, as shown in Fig. 2, the exterior tube 3 is made up of the one end tube 3A structuring one end in the axial direction, a central tube 3B structuring the central part, and the other end tube 3C structuring other end in the axial direction. The tubes each include a flange joint 7. Hence, having respective flange joints 7 of the adjacent tubes abutted on each other, and having the abutted pair of flange joints 7 fastened with a plurality of bolts 8 and nuts 9 to each other thereby strongly coupled to each other, the exterior tube 3 is structured. Note that, while not specifically shown in the drawings, a gasket is interposed between the abutted pair of flange joints 7 so as to secure sealability.

Further, the exterior tube 3 includes, at one end in the axial direction, that is, at the one end tube 3A, a first supply conduit 10 for supplying the brine to the annular flow channel 4. Additionally, the exterior tube 3 includes, at other end in the axial direction, that is, at the other end tube 3C, a first discharge conduit 11 for discharging the brine from the annular flow channel 4.

As shown in Figs. 2, 3, and 7, the first supply conduit 10 and the first discharge conduit 11 are structured to extend so as to be perpendicular to the axial direction of the exterior tube 3 and along the tangent direction of the circumferential wall of the exterior tube 3. Thus, the brine is smoothly supplied and discharged to and from the annular flow channel 4.

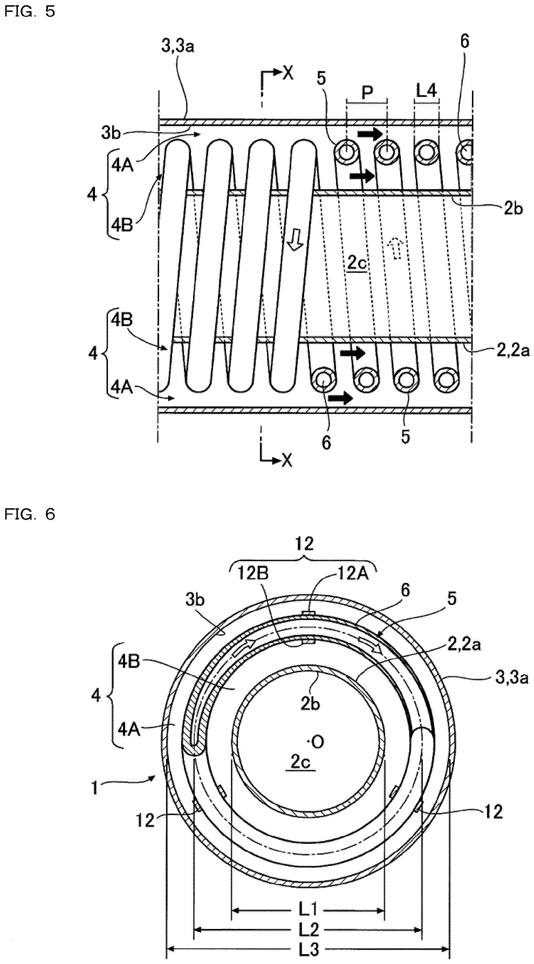

In more detail, using the first supply conduit 10 and the first discharge conduit 11 extending perpendicularly to the axial direction from the opposite ends of the exterior tube 3, as shown in Fig. 5, the brine is caused to flow from the one end in the axial direction of the annular flow channel 4 (one end in the axial direction of the exterior tube 3) to other end (other end in the axial direction of the exterior tube 3). Thus, the brine which is the cooling fluid flows in a certain direction in the annular flow channel 4, that is, in the axial direction as indicated by the solid arrows in the drawings.

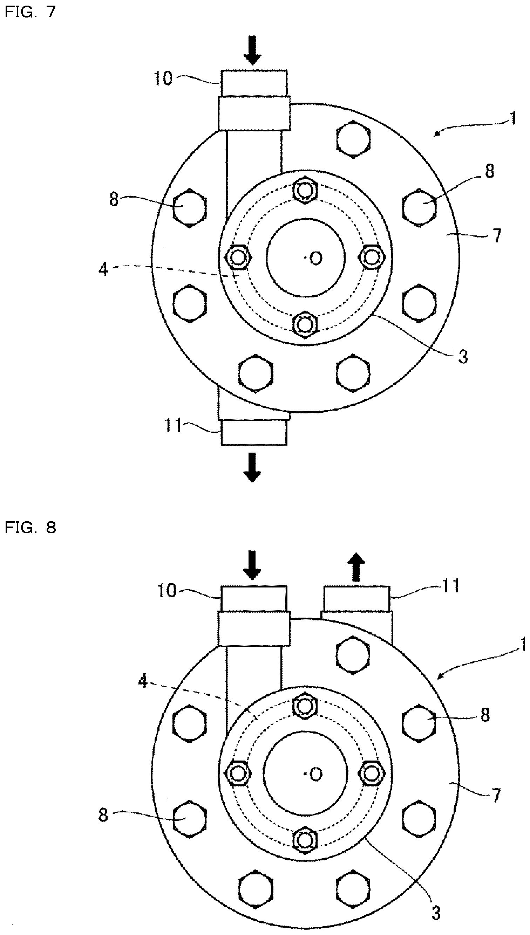

As shown in Fig. 7, when the first supply conduit 10 and the first discharge conduit 11 extend in opposite directions from each other both perpendicularly to the axial direction of the exterior tube 3 on the identical tangent relative to the circumferential wall of the exterior tube 3, the brine is more smoothly supplied and discharged. Further, as shown in Fig. 8, the first supply conduit 10 and the first discharge conduit 11 can extend in the same direction perpendicularly to the axial direction of the exterior tube 3 and respectively on the tangents relative to the circumferential wall of the exterior tube 3, which tangents oppose to each other.

The direction in which the brine which is the cooling fluid in the annular flow channel 4 flows attains a three-dimensional counterflow relative to the direction in which the hydrogen gas which is the cooling-target fluid in the coil tube 5, that is, in the spiral flow channel 6. Thus, further efficient heat exchange is achieved and, consequently, cooling of the hydrogen gas within a short time is achieved.

Further, to each of one end and other end of the exterior tube 3, that is, to each of the one end tube 3A and the other end tube 3C, a protective tube 3c extending in the axial direction is provided. The protective tubes 3c fix the coil tube 5 while protecting a second supply conduit 13 and a second discharge conduit 14, which will be described later, of the coil tube 5.

Note that, a heat insulator such as special elastomer can be disposed so as to cover the outside of the exterior tube 3, that is, the outer circumferential surface 3a. This is intended to avoid providing unwanted thermal energy to the brine flowing in the annular flow channel 4.

### <<Structure of coil tube>>

In view of the exemplary dimension of the interior tube 2 and the exterior tube 3, a round tube which has, for example, an inner diameter of 4.93 mm, an outer diameter of 9.53 mm, and a circumferential wall thickness of 2.3 mm is wound spirally setting an average coil diameter (the average of the coil outer diameter and the coil inner diameter) of 87.2 mm and a coil pitch of 16.18 mm, to form the coil tube 5. The material of the coil tube 5 may be, for example, stainless steel such as austenitic stainless steel whose Ni equivalent weight value falls within a range of 28.5% to 32.09% and which has a tensile strength of 800 N. Such a material is desirable because it minimizes the thickness of the circumferential wall of the coil tube itself shaped (deformed) into a coil, and excellently withstands exposure to hydrogen gas.

As shown in Figs. 1 and 4, the coil tube 5 is formed solenoid coil-like, that is, formed spirally setting its average coil diameter to be constant over the entire length. Alternatively, the average coil diameter may be increased or reduced for part of the length, so that the flow velocity of the brine is adjusted in cooperation with the annular flow channel 4.

Note that, a detailed description will be given of the proper average coil diameter and coil pitch in the section of "structure of annular flow channel and spiral flow channel" which will follow.

To one end in the axial direction of the coil tube 5, the second discharge conduit 14 for discharging the hydrogen gas from the spiral flow channel 6 is provided. To other end in the axial direction of the coil tube 5, the second supply conduit 13 for supplying the hydrogen gas which is the cooling-target fluid to the spiral flow channel 6 is provided. The second supply conduit 13 and the second discharge conduit 14 extend in parallel to the axial direction of the coil tube 5 and in opposite directions from each other. Note that, the second supply conduit 13 and the second discharge conduit 14 are desirably disposed at opposite positions in the coil circumferential direction. The conduits 13, 14 are wrapped by the protective tube 3c of the exterior tube 3 so as to contribute to fixing the coil tube 5 into the annular flow channel 4. This is achieved by virtue of the second supply conduit 13 and the second discharge conduit 14 being disposed so as to oppose to each other as described above, which prevents any undesired rotation of the coil tube 5 in the annular flow channel 4.

The coil tube 5 structured as described above can be disposed so as to be easily removably inserted into the annular flow channel 4 between the interior tube 2 and the exterior tube 3. That is, as described above, the exterior tube 3 can be divided into the one end tube 3A, the central tube 3B, and the other end tube 3C. Further, the second discharge conduit 14 which is one end of the coil tube 5 and the second supply conduit 13 which is other end are both just wrapped by the protective tube 3c of the exterior tube 3, eliminating the necessity of any fixing means such as welding.

In this manner, by virtue of the coil tube 5 being easily removably inserted into the annular flow channel 4, the inspection or the like of the circumferential wall of the coil tube 5 is facilitated, and maintainability improves. Hence, particularly in using a fluid that must be handled with care such as hydrogen gas also, safety is secured.

Further, preferably, as shown in Figs. 1 and 4, by virtue of the provision of a shape retainer 12 at the coil tube 5 along its axial direction for retaining the whole shape of the coil tube 5 and the coil pitch, proper flow of each of the brine flowing around the coil tube 5 and the hydrogen gas flowing inside the coil tube 5 is secured.

The shape retainer 12 is made up of an outer shape retainer 12A and an inner shape retainer 12B. The coil tube 5 is set between the outer shape retainer 12A and the inner shape retainer 12B to be held from the inner side and the outer side along the axial direction. The outer shape retainer 12A and the inner shape retainer 12B between which the coil tube 5 is set are bound, while being spaced apart from each other by a proper distance, with a band made of stainless steel. As shown in Fig. 6, desirably, a plurality of shape retainers 12 are provided at a constant interval in the coil circumferential direction. In the present invention, the number of the shape retainer 12 are not particularly specified.

### <<Structure of annular flow channel and spiral flow channel>>

As shown in Figs. 4 to 6, the annular flow channel 4 is divided into an outer annular flow channel 4A on the outer side relative to the coil tube 5 and an inner annular flow channel 4B on the inner side relative to the coil tube 5. Hence, the brine branches off to flow into the outer annular flow channel 4A and the inner annular flow channel 4B, and flows having the coil tube 5, and consequently the spiral flow channel 6, interposed between them.

In the present invention, as shown in Fig. 6, by setting the average coil diameter L2 of the coil tube 5 so that the cross-sectional area of the outer annular flow channel 4A (πL3²/2-πL2²/2) and the cross-sectional area of the inner annular flow channel 4B (πL2²/2-πL1²/2) to be identical to each other, the brine flowing in the outer annular flow channel 4A and the brine flowing in the inner annular flow channel 4B coincide with each other in flow velocity and flow rate. Thus, the hydrogen gas flowing in the spiral flow channel 6 is cooled evenly from the inner and outer sides via the circumferential wall of the coil tube 5. Note that, L1 represents "the outer diameter of the interior tube 2", L2 represents "the average coil diameter", and L3 represents "the inner diameter of the exterior tube 3".

In the present invention, as described above, by setting the cross-sectional area of the outer annular flow channel 4A and the cross-sectional area of the inner annular flow channel 4B to be identical to each other and minimizing the cross-sectional area of the annular flow channels 4A, 4B, the flow velocity of the brine is increased, whereby efficient heat exchange is achieved. For example, in the case where the shape retainer 12 is provided to the coil tube 5 as described above, the outer circumferential surface 2a of the interior tube 2 and the inner circumferential surface 3b of the exterior tube 3 have the shape retainer 12 interposed between them thereby holding the shape retainer 12, so that the cross-sectional area of the outer annular flow channel 4A and that of the inner annular flow channel 4B are minimized. In this case, the thickness of the outer shape retainer 12A and that of the inner shape retainer 12B are adjusted, so that the cross-sectional area of the outer annular flow channel 4A and the cross-sectional area of the inner annular flow channel 4B become identical to each other.

Further, as shown in Fig. 5, the average coil diameter L2 of the coil tube 5 is desirably at least four times as great as the outer diameter L4 of the coil tube 5. Still further, the coil pitch P desirably falls within a range of 1.5 times to 2.0 times as great as the outer diameter L4 of the coil tube 5. This is to stably retain the whole shape of the coil tube 5 and still to secure proper flow of the brine which is the cooling fluid flowing along the outer circumferential surface of the coil tube 5.

The annular flow channel 4 and the spiral flow channel 6 are structured as described above, and the brine is allowed to flow from the one end in the axial direction of the exterior tube 3 to other end thereof through the annular flow channel 4 while the hydrogen gas is allowed to flow from other end in the axial direction of the exterior tube 3 to one end thereof through the spiral flow channel 6. Accordingly, in the heat exchanger 1 in the present invention, the direction in which the brine which is the cooling fluid in the annular flow channel 4 flows and the direction in which the hydrogen gas which is the cooling-target fluid in the spiral flow channel 6 attain three-dimensional counterflow, thereby achieving efficient heat exchange and cooling the hydrogen gas within a short time.

As has been described above, the heat exchanger 1 of the present invention is capable of surely cooling the cooling-target fluid within a short time despite its simple structure. Further, the simple structure contributes to reducing the material cost and the assembly cost.

Further, in the heat exchanger of the present invention, the cooling fluid and the cooling-target fluid each flow in a certain direction and, therefore, the flow energy of each fluid is not wasted. Hence, a plurality of heat exchangers can be connected easily, so as to further improve heat exchange.

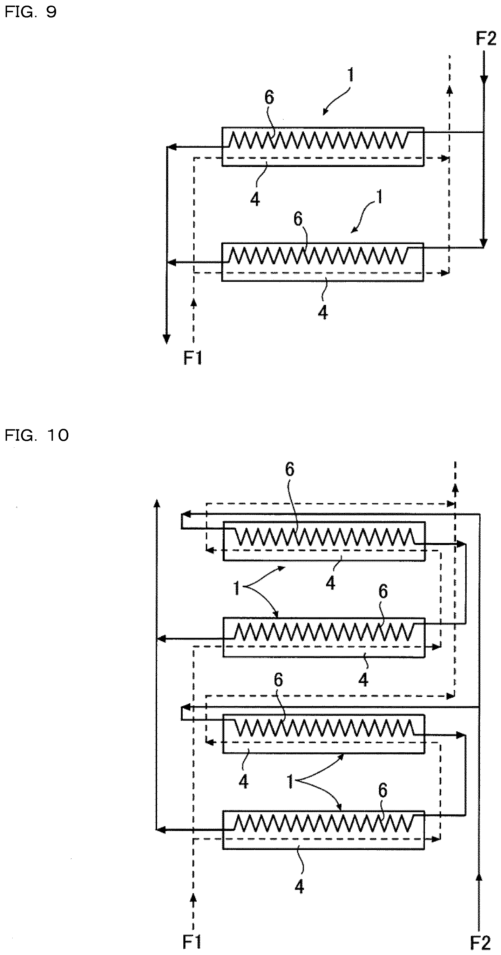

For example, as shown in Fig. 9, by connecting two heat exchangers 1 in parallel and allowing the brine F1 and the hydrogen gas F2 to flow separately and in parallel to each other, efficiency further improves. Further, as shown in Fig. 10, by arranging pairs of serially-connected heat exchangers 1 in parallel, and allowing the brine F1 and the hydrogen gas F2 to flow separately through the pairs of heat exchangers 1 in parallel, efficiency further improves. It goes without saying that the number of heat exchangers 1 connected in parallel or in series can be adjusted as appropriate.

Further, the heat exchanger 1 of the present invention allows the coil tube 5 between the interior tube 2 and the exterior tube 3 to be easily inserted or removed, and exhibits excellent maintainability and safety.

### Industrial Applicability

The heat exchanger 1 of the present invention is capable of achieving efficient heat exchange while reducing costs by virtue of its simple structure. Additionally, the heat exchanger 1 is excellent in maintainability and safety. Thus, it is greatly advantageous to use the heat exchanger 1 of the present invention as a pre-cooler installed in a hydrogen station, largely contributing also to widespread use of fuel cell vehicles.

### Reference Signs List

- 1: heat exchanger
- 2: interior tube
- 2a: outer circumferential surface
- 2b: inner circumferential surface
- 2c: inside part
- 2d: centering projection
- 3: exterior tube
- 3A: one end tube
- 3B: central tube
- 3C: other end tube
- 3a: outer circumferential surface
- 3b: inner circumferential surface
- 3c: protective tube
- 3d: centering projection receiving recess
- 4: annular flow channel
- 4A: outer annular flow channel
- 4B: inner annular flow channel
- 5: coil tube
- 6: spiral flow channel
- 7: flange joint
- 8: bolt
- 9: nut
- 10: first supply conduit
- 11: first discharge conduit
- 12: shape retainer
- 12A: outer shape retainer
- 12B: inner shape retainer
- 13: second supply conduit
- 14: second discharge conduit
- 0: center axis
- F1: brine (cooling fluid)
- F2: hydrogen gas (cooling-target fluid)
- L1: outer diameter of interior tube
- L2: average coil diameter
- L3: inner diameter of exterior tube
- L4: outer diameter of coil tube
- P: coil pitch

## Claims

1. A heat exchanger comprising:
an interior tube;
an exterior tube, the interior tube and the exterior tube being coaxially disposed to each other to structure a double-tube structure, an annular flow channel being formed along an axial direction between an outer circumferential surface of the interior tube and an inner circumferential surface of the exterior tube; and
a coil tube disposed along the axial direction in the annular flow channel to form a spiral flow channel, wherein
no flow channel is formed inside the interior tube, and
heat is exchanged between a cooling fluid flowing in a certain direction in the annular flow channel and a cooling-target fluid flowing in a certain direction in the spiral flow channel.

2. The heat exchanger according to claim 1, wherein a direction in which the cooling fluid flows is a counterflow relative to a direction in which the cooling-target fluid flows .

3. The heat exchanger according to claim 1 or 2, wherein the coil tube is removably inserted into the annular flow channel.

4. The heat exchanger according to any one of claims 1 to 3, wherein, in the annular flow channel, an average coil diameter of the coil tube is set so that a cross-sectional area of an outer annular flow channel outer than the coil tube and a cross-sectional area of an inner annular flow channel inner than the coil tube become identical to each other.

5. The heat exchanger according to any one of claims 1 to 4, wherein the average coil diameter of the coil tube is at least four times as great as an outer diameter of the coil tube.

6. The heat exchanger according to any one of claims 1 to 5, further comprising a shape retainer provided at the coil tube along the axial direction, the shape retainer retaining a whole shape of the coil tube and a coil pitch of the coil tube.

7. The heat exchanger according to any one of claims 1 to 6, wherein a heat insulator is disposed inside the interior tube and/or outside the exterior tube.

## Amended claims

### Amended claims under Art. 19.1 PCT

1. A heat exchanger comprising:
an interior tube;
an exterior tube, the interior tube and the exterior tube being coaxially disposed to each other to structure a double-tube structure, an annular flow channel being formed along an axial direction between an outer circumferential surface of the interior tube and an inner circumferential surface of the exterior tube; and
a coil tube disposed along the axial direction in the annular flow channel to form a spiral flow channel, wherein
no flow channel is formed inside the interior tube,
in the annular flow channel, an average coil diameter of the coil tube is set so that a cross-sectional area of an outer annular flow channel outer than the coil tube and a cross-sectional area of an inner annular flow channel inner than the coil tube become identical to each other, and
heat is exchanged between a cooling fluid flowing in a certain direction in the annular flow channel and a cooling-target fluid flowing in a certain direction in the spiral flow channel.

2. The heat exchanger according to claim 1, wherein a direction in which the cooling fluid flows is a counterflow relative to a direction in which the cooling-target fluid flows .

3. The heat exchanger according to claim 1 or 2, wherein the coil tube is removably inserted into the annular flow channel.

4. The heat exchanger according to any one of claims 1 to 3, wherein the average coil diameter of the coil tube is at least four times as great as an outer diameter of the coil tube.

5. The heat exchanger according to any one of claims 1 to 3, or claim 4, further comprising a shape retainer provided at the coil tube along the axial direction, the shape retainer retaining a whole shape of the coil tube and a coil pitch of the coil tube.

6. The heat exchanger according to any one of claims 1 to 3, or claim 4 or 5, wherein a heat insulator is disposed inside the interior tube and/or outside the exterior tube.
